# EUROPÄISCHE PATENTSCHRIFT

(11) **EP 1 608 891 B1**
(45) Veröffentlichungstag und Bekanntmachung des Hinweises auf die Patenterteilung: **06.07.2011**
(21) Anmeldenummer: 04722152.8
(22) Anmeldetag: 20.03.2004
(51) Int. Cl.: F16H 45/00

(54) **HYDRODYNAMISCHER WANDLER MIT EINER PRIMÄRKUPPLUNG**
HYDRODYNAMIC CONVERTER COMPRISING A PRIMARY CLUTCH
CONVERTISSEUR HYDRODYNAMIQUE DOTE D'UN EMBRAYAGE PRIMAIRE

(30) Priorität: 28.03.2003 DE 10314324
(43) Veröffentlichungstag der Anmeldung: 28.12.2005
(73) Patentinhaber: ZF Friedrichshafen AG, 88038 Friedrichshafen (DE)
(72) Erfinder: LEBER, Fritz, 88048 Friedrichshafen (DE)
(86) Internationale Anmeldenummer: PCT/EP2004/002937
(87) Internationale Veröffentlichungsnummer: WO 2004/085877

(56) Entgegenhaltungen:
- EP-A- 1 001 190
- GB-A- 664 497
- US-A- 3 107 555
- US-A- 3 537 262
- US-A- 3 583 243
- US-A- 5 609 551
- US-A- 5 699 887
- PATENT ABSTRACTS OF JAPAN Bd. 0080, Nr. 94 (M-293), 28. April 1984 (1984-04-28) & JP 59 009359 A (NISSAN JIDOSHA KK), 18. Januar 1984 (1984-01-18)
- PATENT ABSTRACTS OF JAPAN Bd. 0080, Nr. 94 (M-293), 28. April 1984 (1984-04-28) & JP 59 009356 A (NISSAN JIDOSHA KK), 18. Januar 1984 (1984-01-18)

## Beschreibung

Die vorliegende Erfindung betrifft einen hydrodynamischen Wandler mit einer Primärkupplung für den Antriebsstrang eines Kraftfahrzeugs, insbesondere einer Arbeitsmaschine wie beispielsweise eines Radladers, eines Staplers oder eines Dumpers gemäß den Oberbegriffen der Patentansprüche 1 und 3.

Hydrodynamische Wandler sind seit der Einführung automatischer Getriebe das Bindeglied zwischen einer Antriebsmaschine und dem eigentlichen Getriebe. Ein Wandler ermöglicht zum einen durch den Schlupf ein komfortables ruckfreies Anfahren und dämpft gleichzeitig Drehungleichförmigkeiten des Verbrennungsmotors. Zum anderen stellt die prinzipbedingte Momentüberhöhung ein großes Anfahrmoment zur Verfügung.

Ein hydrodynamischer Wandler besteht nach dem Stand der Technik aus einem Pumpenrad, einem Turbinenrad, dem Reaktionsglied (Leitrad, Stator) und dem zur Drehmomentübertragung notwendigen Öl.

Das Pumpenrad, welches durch den Motor angetrieben wird, versetzt das Öl im Wandler in eine kreisförmige Strömung. Diese Ölströmung trifft auf das Turbinenrad und wird dort in der Strömungsrichtung umgelenkt.

Im Nabenbereich verläßt das Öl die Turbine und gelangt auf das Reaktionsglied (Leitrad), wo es erneut umgelenkt und somit in der passenden Anströmrichtung dem Pumpenrad zugeführt wird.

Durch die Umkehr entsteht am Leitrad ein Moment, dessen Reaktionsmoment das Turbinenmoment erhöht. Das Verhältnis Turbinenmoment zu Pumpenmoment wird als Momenterhöhung bezeichnet. Je größer der Drehzahlunterschied zwischen Pumpe und Turbine ist, desto größer ist die Momenterhöhung, welche bei stehender Turbine die maximale Größe hat. Mit zunehmender Türbinendrehzahl sinkt folglich die Momenterhöhung ab. Erreicht die Turbinendrehzahl ca. 85% der Pumpendrehzahl, wird die Momenterhöhung=1, d.h. das Turbinenmoment ist gleich dem Pumpenmoment.

Das Leitrad, das sich über den Freilauf und die Leitradwelle zum Getriebegehäuse abstützt, läuft in diesem Zustand frei in der Strömung mit und der Freilauf wird überrollt. Von diesem Punkt an arbeitet der Wandler als reine Strömungskupplung. Während der Wandlung steht das Leitrad still und wird über den Freilauf zum Gehäuse abgestützt.

Aus dem Stand der Technik sind Wandler bekannt, welche eine Wandlerüberbrückungskupplung und eine Primärkupplung umfassen, wobei die Primärkupplung (PK) zwischen Motor und Wandler und die Wandlerüberbrückungskupplung zwischen Motor und Getriebe geschaltet ist.

Derartige Wandler sind üblicherweise für Fahrzeuge vorgesehen, die Arbeiten bei sehr niedrigen Geschwindigkeiten verrichten, aber auch mit hohen Geschwindigkeiten fahren können. Beispielsweise ist im Rahmen der DE 195 21 458 A1 ein Wandler mit Wandlerüberbrückungskupplung und Primärkupplung beschrieben. Nach dem Stand der Technik ist für. Wandlerüberbrückungskupplung und Primärkupplung jeweils eine eigene Druckzuführung und eine eigene Ventileinheit vorgesehen.

Es sind auch Wandler bekannt, die eine Wandlerüberbrtickungskupplung umfassen und insbesondere bei Transportfahrzeugen, wie z. B. Dumper oder Krane, eingesetzt werden. Dahingegen werden Wandler mit Primärkupplung bei Arbeitsmaschinen, wie z. B. Radlader oder Stapler, eingesetzt.

Die EP 1 001 190 A2 offenbart, wie in den Oberbegriffen der Ansprüche 1 und 3, einen hydrodynamischen Wandler und eine Primärkupplung, wobei die Primärkupplung im Getriebe angeordnet ist.

Der vorliegenden Erfindung liegt die Aufgabe zugrunde, einen hydrodynamischen Wandler zu schaffen, bei dem die Pumpe über eine Primärkupplung mit dem Antrieb des Motors lösbar verbindbar ist.

Diese Aufgabe wird durch die Merkmale der Patentansprüche 1 und 3 gelöst. Weitere Ausgestaltungen und Vorteile gehen aus den Unteransprüchen hervor.

Demnach wird ein hydrodynamischer Wandler für den Antriebsstrang eines Kraftfahrzeugs vorgeschlagen, umfassend eine Pumpe, eine Turbine, welche mit der Getriebeeingangswelle verbunden ist und einen Stator (Leitrad), bei dem die Pumpe über eine Primärkupplung mit dem Antrieb des Motors lösbar verbindbar ist, wobei die Primärkupplung im Getriebe angeordnet ist.

Hierbei kann die Primärkupplung als vom Getriebesystemdruck betätigbare Positiv-Kupplung oder Negativ-Kupplung oder als vom Wandlerdruck betätigbare Kupplung ausgebildet sein. Je nach Kupplungsausführung kann die Schmierung der Kupplung über das Getriebesystem oder über den Wandlerkreislauf erfolgen.

Die Erfindung wird im folgenden anhand der beigefügten Figuren beispielhaft näher erläutert. Es zeigen:
Figur 1: Eine erste Ausführungsform der vorliegenden Erfindung, bei der eine Primärkupplung und eine Wandlerüberbrückungskupplung vorgesehen sind;
Figur 2: Eine zweite Ausführungsform der vorliegenden Erfindung, bei der eine Primärkupplung und eine Wandlerüberbrückungskupplung vorgesehen sind;
Figur 3: Eine weitere Ausführungsform der vorliegenden Erfindung, bei der eine Primärkupplung und eine Wandlerüberbrückungskupplung vorgesehen sind;
Figur 4: Eine vierte Ausführungsform der vorliegenden Erfindung, bei der eine Primärkupplung und eine Wandlerüberbrückungskupplung vorgesehen sind;
Figur 5: Eine fünfte Ausführungsform der vorliegenden Erfindung, bei der eine Primärkupplung und eine Wandlerüberbrückungskupplung vorgesehen sind;
Figur 6: Eine sechste Ausführungsform der vorliegenden Erfindung, bei der eine Primärkupplung und eine Wandlerüberbrückungskupplung vorgesehen sind; und
Figur 7: Eine weitere Ausführungsform der vorliegenden Erfindung, bei der eine Primärkupplung und eine Wandlerüberbrückungskupplung vorgesehen sind.

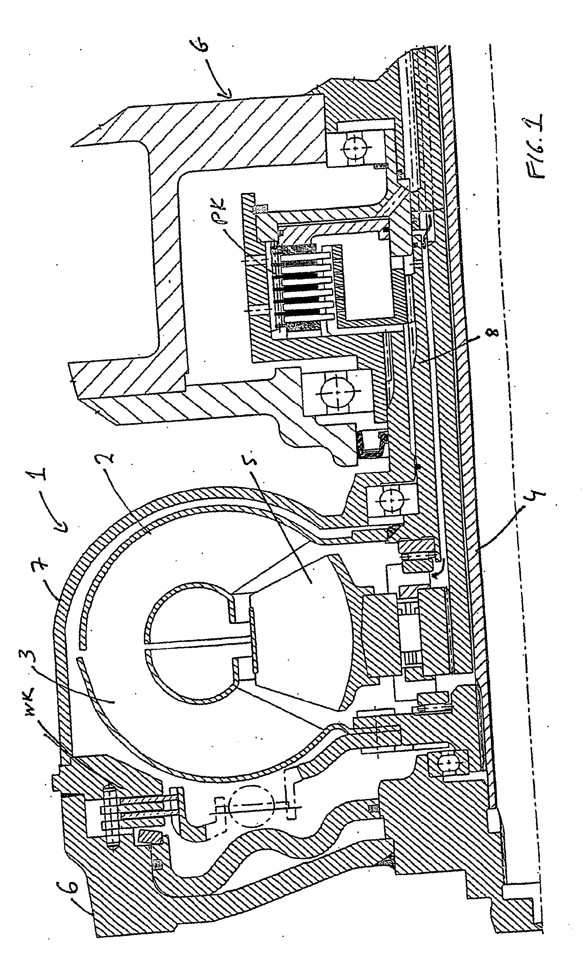

In Figur 1 ist ein hydrodynamischer Wandler 1 gezeigt, umfassend eine Pumpe 2, eine Turbine 3, welche mit der Getriebeeingangswelle 4 verbunden ist, und einen Stator (Leitrad) 5. Ferner sind der Antrieb 6 des Motors sowie die Wandlerschale 7 gezeigt. Der Wandler 1 umfasst eine motorseitig angeordnete Wandlerüberbrückungskupplung WK, welche den Antrieb 6 mit dem Getriebe bzw. der Getriebeeingangswelle 4 lösbar verbindet. Gemäß der Erfindung ist die Primärkupplung PK nicht im Wandler, sondern im Getriebe G angeordnet und verbindet den Antrieb des Motors über die Wandlerschale 7 mit der Pumpennabe 8 der Pumpe 2.

Die Primärkupplung PK ist gegen das Öl des Wandlerkreislaufes abgedichtet; die Schmierung und Kühlung der Kupplung erfolgt aus dem Getriebesystem, wobei dann das Kühlöl in den Getriebesumpf abströmt. Bei dem in Figur 1 gezeigten Ausführungsbeispiel ist die Primärkupplung PK als "positive Kupplung" ausgeführt, d.h. die wird unter Druckbeaufschlagung geschlossen. Hierbei wird die Primärkupplung mit Getriebe-System-Druck geschlossen, wobei der Druck unabhängig vom Wandlerdruck, "schwarz-weiß" oder über eine Druckrampe geregelt werden kann.

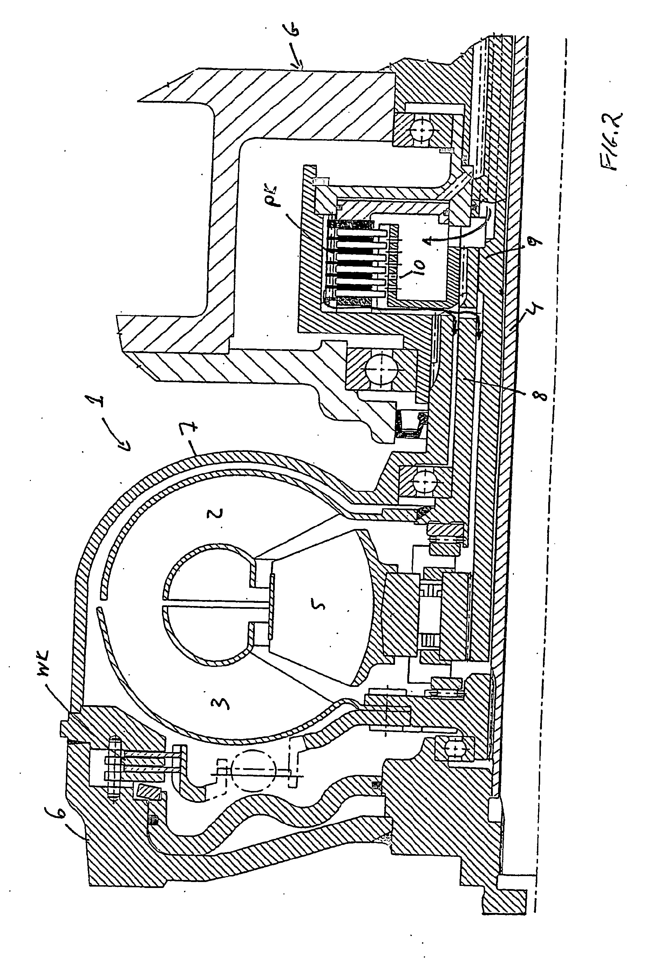

In Figur 2 ist eine weitere Ausführungsform dargestellt, bei der das dem Wandler 1 zugeführte Öl die Primärkupplung durchströmt (siehe Pfeile in der Figur), so dass die Primärkupplung bei "Dauerrutschen" ausreichend geschmiert und gekühlt wird. Zu diesem Zweck wird der Spalt zwischen Pumpennabe 8 und Leitradwelle 9 abgedichtet (Dichtring oder enger Spalt), so dass das Öl dem Innenlamellenträger zugeführt werden kann; anschließend gelangt das Öl durch Öffnungen 10 zu den Lamellen.

Gemäß der Erfindung sind im Reibbelag Nuten vorgesehen, welche das Öl nach außen fördern, wo es in den tiefen Lücken der Mitnahme gesammelt wird. Das Öl wird in radialen Nuten in der Endscheibe und dem Innenlamellenträger nach innen geführt und kann dann im Spalt zwischen Pumpennabe 8 und Wandlerschale 7 axial zum Wandler strömen. Zudem kann das Öl über Bohrungen im Spalt zwischen Pumpennabe 8 und Leitradwelle 9 in den Wandler strömen. Die Primärkupplung wird unter Druckbeaufschlagung geschlossen, wobei der Schließdruck des Getriebesystems dem Wandler-Innendruck überlagert wird.

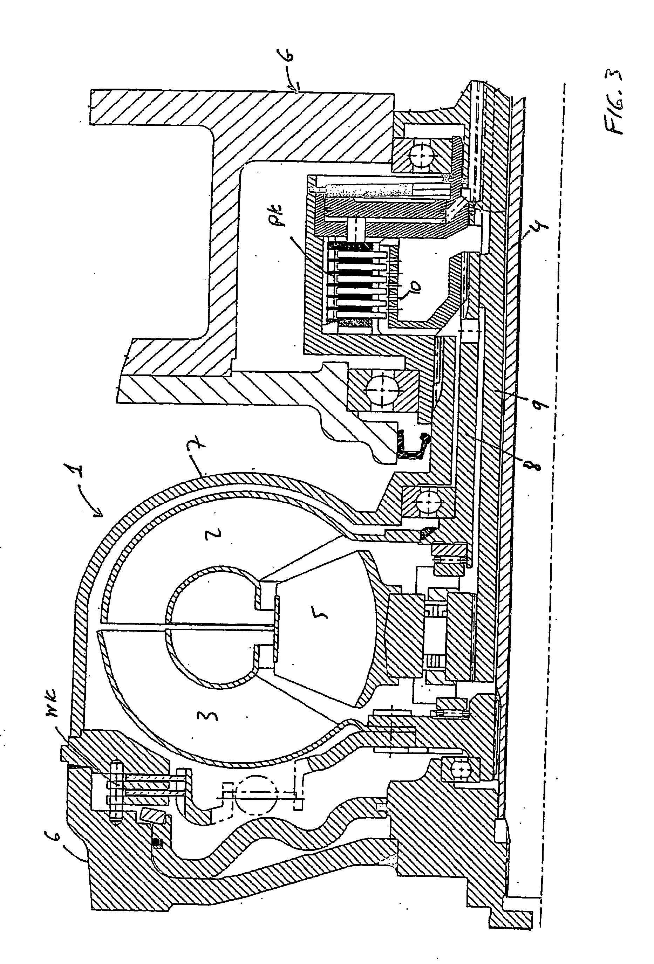

Im Rahmen der in Figur 3 gezeigten Ausführungsform ist die Primärkupplung PK als Negativ-Kupplung ausgeführt; sie wird mit Federkraft geschlossen und mit Druck geöffnet, wobei sie vom Wandler-Innendruck (bis auf die Fläche der Druckbolzen) unabhängig ist. Zur Ansteuerung dieser Primärkupplung kann der Druck unabhängig vom Wandlerdruck "schwarz-weiß" oder über eine Druckrampe geregelt werden.

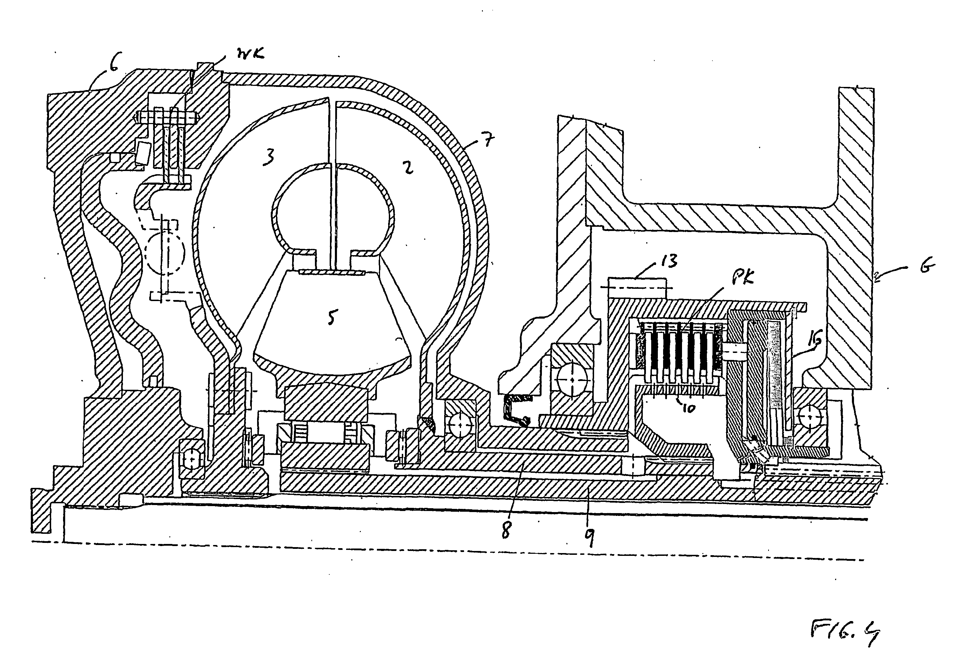

Durch eine zusätzliche Stauscheibe 16 kann ein Rotations-Druck-Ausgleich erreicht werden, wie in Figur 4 gezeigt.

Gemäß der Erfindung kann die Primärkupplung auch über den Wandlerdruck betätigt werden. Je höher die Motordrehzahl, um so höher wird der Durchflusswiderstand und um so größer ist dann die Kolbenkraft bzw. das Kupplungsmoment.

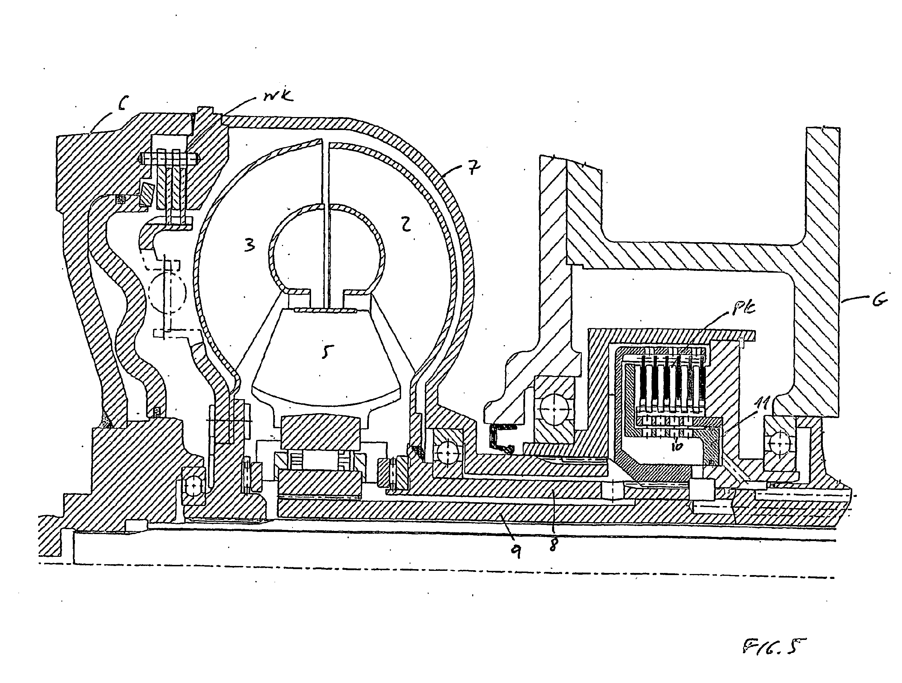

Bei Primärkupplungen, bei denen die Primärkupplung über den Wandlerdruck betätigt wird, wirkt durch Absenken des Druckes hinter dem Kolben 11 der Wandlerdruck gegen den Kolben, so dass der Kolben auf das Lamellenpaket drückt und die Kupplung schließt. Eine derartige Ausführungsform ist Gegenstand der Figur 5.

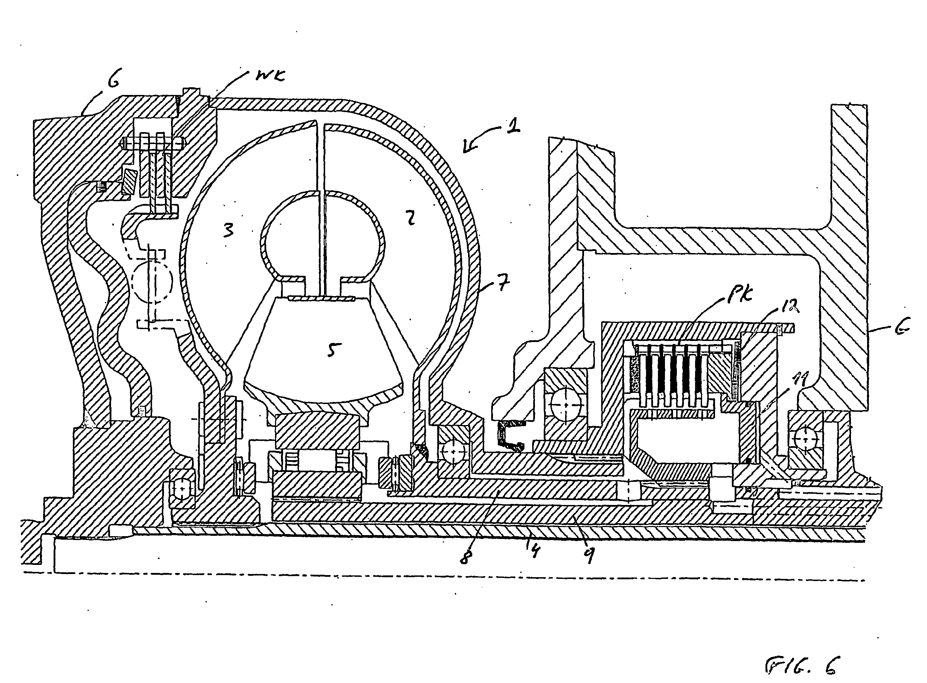

In Figur 6 ist ebenfalls eine über den Wandlerdruck betätigbare Primärkupplung PK gezeigt, welche mittels der Kraft einer Feder 12 geschlossen wird. Durch Absenken des Druckes hinter dem Kolben 11 schiebt der Wandler-Druck den Kolben gegen die Feder 11 und öffnet die Kupplung.

Die in den Ausführungsformen gemäß den Figuren 5 und 6 vorgesehenen Primärkupplungen können nur in in Wandleröl durchströmter Ausführung funktionieren, da sie den Wandlerdruck für deren Betätigung benötigen.

Gemäß der Erfindung kann auf der Außenkontur der Primärkupplung PK kann eine Verzahnung 13 angebracht werden, wie dies in Figur 4 gezeigt ist. Diese Verzahnung kann in vorteilhafter Weise zum Antrieb von Nebenaggregaten, PTO'S, direkten motorgetriebenen Gängen (in diesem Fall kann auf die WK verzichtet werden) und/oder zum Abgriff der Motordrehzahl verwendet werden.

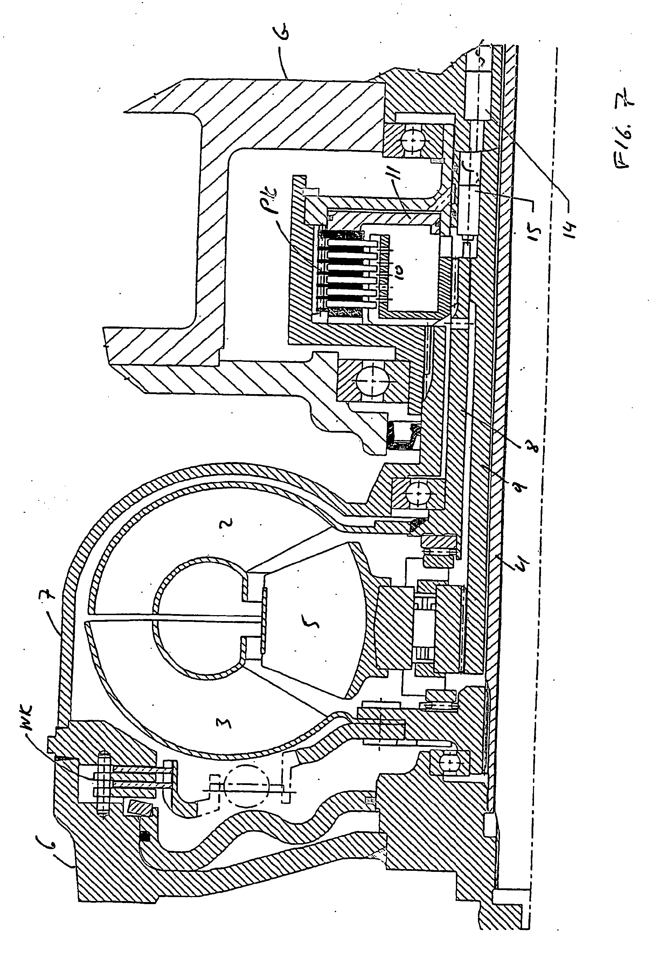

Bei allen Ausführungen können Sensoren eingebaut werden, beispielsweise ein Drucksensor 14, um den Druck vor dem Kolben 11 zu erfassen, oder ein Drehzahlsensor 15 zur Erfassung der Pumpendrehzahl. Dies ist beispielhaft in Figur 7 dargestellt.

Bei den Ausführungen, bei denen die Primärkupplung vom Wandleröl durchströmt wird, mit Ausnahme der Ausführungsbeispiele gemäß den Figuren 3 und 4, muss zur exakten Nomentenregelung der Kupplung, der Wandlerdruck (der vor dem Kolben steht) für die Bestimmung des Kupplungs-Betätigungsdruckes mit einbezogen werden. Hierbei ist der Abgriff des Wandlerdruckes relativ einfach, da sich der Raum unmittelbar über der Leitradwelle 9 befindet. Dies erlaubt sowohl eine Druckrückführung zum Ansteuerventil oder die Unterbringung eines Drucksensors. Das Signal des Drucksensors wird zusammen mit den Anforderungen des Fahrers oder/und aus dem Fahrzeug, in einer Elektronik verarbeitet, die dann z.B. ein Proportional-Ventil steuert, welches den Betätigungsdruck für die Kupplung ausgibt.

### Bezugszeichen

- 1: Hydrodynamischer Wandler
- 2: Pumpenrad
- 3: Turbine
- 4: Getriebeeingangswelle
- 5: Stator
- 6: Antrieb des Motors
- 7: Wandlerschale
- 8: Pumpennabe
- 9: Leitradwelle
- 10: Öffnung
- 11: Kolben
- 12: Feder
- 13: Verzahnung
- 14: Drucksensor
- 15: Drehzahlsensor
- 16: Stauscheibe
- PK: Primärkuplung
- WK: Wandlerüberbrückungskupplung
- G: Getriebe

## Patentansprüche

1. Hydrodynamischer Wandler für den Antriebsstrang eines Kraftfahrzeugs, mit einem Getriebe und einer Primärkupplung (PK)umfassend eine Pumpe (2), eine Turbine (3), welche mit der Getriebeeingangswelle (4) verbunden ist und einen Stator (5), bei dem die Pumpe (2) über die Primärkupplung (PK) mit dem Antrieb (6) des Motors lösbar verbindbar ist, wobei, die Primärkupplung (PK) im Getriebe (G) angeordnet ist, **dadurch gekennzeichnet, dass** die Primärkupplung (PK) vom Wandleröl durchströmt wird und mit Getriebe-System-Druck geschlossen wird.

2. Hydrodynamischer Wandler nach Anspruch 1, **dadurch gekennzeichnet, dass** der Spalt zwischen Pumpennabe (8) und Leitradwelle (9) abgedichtet ist, so dass das Öl dem Innenlamellenträger der Primärkupplung (PK) zugeführt werden kann, wobei der Innenlamellenträger Öffnungen (10) aufweist, so dass das Öl durch die Öffnungen (10) zu den Lamellen gelangt, wobei im Reibbelag Nuten vorgesehen sind, die das Öl nach außen fördern und wobei das Öl im Spalt zwischen Pumpennabe (8) und Wandlerschale (7) und über Bohrungen im Spalt zwischen Pumpennabe (8) und Leitradwelle (9) axial zum Wandler (1) strömt.

3. Hydrodynamischer Wandler für den Antriebsstrang eines Kraftfahrzeugs, mit einem Getriebe und einer Primärkupplung (PK)umfassend eine Pumpe (2), eine Turbine (3), welche mit der Getriebeeingangswelle (4) verbunden ist und einen Stator (5), bei dem die Pumpe (2) über die Primärkupplung (PK) mit dem Antrieb (6) des Motors lösbar verbindbar ist, wobei die Primärkupplung (PK) im Getriebe (G) angeordnet ist, **dadurch gekennzeichnet, dass** die Primärkupplung (PK) durch den Wandlerdruck betätigbar ist und vom Wandleröl durchströmt wird.

4. Hydrodynamischer Wandler nach Anspruch 3, **dadurch gekennzeichnet, dass** die Primärkupplung (PK) durch Absenken des Druckes hinter dem Kolben (11) der Primärkupplung (PK) durch den Wandlerdruck schließbar ist.

5. Hydrodynamischer Wandler nach Anspruch 3, **dadurch gekennzeichnet, dass** die Primärkupplung (PK) mittels der Kraft einer Feder (12) schließbar ist, wobei durch Absenken des Druckes hinter dem Kolben (11),der Kolben (11) vom Wandler-Druck gegen die Feder (12) bewegbar ist, so dass sich die Primärkupplung (PK) öffnet.

6. Hydrodynamischer Wandler nach Anspruch 3; **dadurch gekennzeichnet, dass** zur exakten Momentenregelung der Primärkupplung (PK), der Wandlerdruck für die Bestimmung des Kupplungs-Betätigungsdruckes über eine Druckrückführung zum Ansteuerventil oder mittels eines Drucksensors messbar ist.

7. Hydrodynamischer Wandler nach einem der vorangehenden Ansprüche, **dadurch gekennzeichnet, dass** die Primärkupplung einen Drucksensor (14) zur Erfassung des Kolbendruckes und/oder einen Drehzahlsensor (15) zur Erfassung der Pumpendrehzahl umfasst.

## Claims

1. Hydrodynamic converter for the drive train of a motor vehicle, having a gearbox and a primary clutch (PK), comprising a pump (2), a turbine (3) which is connected to the gearbox input shaft (4), and a stator (5), in which hydrodynamic converter the pump (2) can be connected releasably via the primary clutch (PK) to the drive (6) of the engine, the primary clutch (PK) being arranged in the gearbox (G), **characterized in that** converter oil flows through the primary clutch (PK), and the primary clutch (PK) is closed with gearbox system pressure.

2. Hydrodynamic converter according to Claim 1, **characterized in that** the gap between the pump hub (8) and the stator shaft (9) is sealed, with the result that the oil can be fed to the inner multiple-disc carrier of the primary clutch (PK), the inner multiple-disc carrier having openings (10), with the result that the oil passes through the openings (10) to the multiple discs, grooves being provided in the friction lining, which grooves convey the oil to the outside, and the oil flowing axially with respect to the converter (1) in the gap between the pump hub (8) and the converter shell (7) and via holes in the gap between the pump hub (8) and the stator shaft (9).

3. Hydrodynamic converter for the drive train of a motor vehicle, having a gearbox and a primary clutch (PK), comprising a pump (2), a turbine (3) which is connected to the gearbox input shaft (4), and a stator (5), in which hydrodynamic converter the pump (2) can be connected releasably via the primary clutch (PK) to the drive (6) of the engine, the primary clutch (PK) being arranged in the gearbox (G), **characterized in that** the primary clutch (PK) can be actuated by the converter pressure and the converter oil flows through the primary clutch (PK).

4. Hydrodynamic converter according to Claim 3, **characterized in that** the primary clutch (PK) can be closed by the converter pressure, by reducing the pressure behind the piston (11) of the primary clutch (PK).

5. Hydrodynamic converter according to Claim 3, **characterized in that** the primary clutch (PK) can be closed by means of the force of a spring (12), it being possible for the piston (11) to be moved by the converter pressure counter to the spring (12) by reducing the pressure behind the piston (11), with the result that the primary clutch (PK) opens.

6. Hydrodynamic converter according to Claim 3, **characterized in that**, for the exact moment regulation of the primary clutch (PK), the converter pressure can be measured via pressure feedback to the actuating valve or by means of a pressure sensor for the determination of the clutch actuating pressure.

7. Hydrodynamic converter according to one of the preceding claims, **characterized in that** the primary clutch comprises a pressure sensor (14) for detecting the piston pressure and/or a speed sensor (15) for detecting the pump speed.

## Revendications

1. Convertisseur hydrodynamique pour la colonne d'entraînement d'un véhicule automobile, avec une boîte de vitesses et un embrayage primaire (PK) comprenant une pompe (2), une turbine (3), qui est assemblée à l'arbre d'entrée (4) de la boîte de vitesses, et un stator (5), dans lequel la pompe (2) peut être reliée de façon séparable à l'entraînement (6) du moteur par l'intermédiaire de l'embrayage primaire (PK), dans lequel l'embrayage primaire (PK) est disposé dans la boîte de vitesses (G), **caractérisé en ce que** l'embrayage primaire (PK) est parcouru par l'huile du convertisseur et est fermé avec la pression du système de boîte de vitesses.

2. Convertisseur hydrodynamique selon la revendication 1, **caractérisé en ce que** l'intervalle entre le moyeu de pompe (8) et l'arbre de roue directrice (9) est rendu étanche, de telle manière que l'huile puisse être envoyée au porte-lamelles intérieur de l'embrayage primaire (PK), dans lequel le porte-lamelles intérieur présente des ouvertures (10), de telle manière que l'huile puisse arriver aux lamelles à travers les ouvertures (10), dans lequel il est prévu dans la garniture de friction des rainures qui transportent l'huile vers l'extérieur, et dans lequel l'huile s'écoule axialement vers le convertisseur (1) dans l'intervalle entre le moyeu de pompe (8) et l'enceinte de convertisseur (7) et, par des alésages, dans l'intervalle entre le moyeu de pompe (8) et l'arbre de roue directrice (9).

3. Convertisseur hydrodynamique pour la colonne d'entraînement d'un véhicule automobile, avec une boîte de vitesses et un embrayage primaire (PK) comprenant une pompe (2), une turbine (3), qui est assemblée à l'arbre d'entrée (4) de la boîte de vitesses, et un stator (5), dans lequel la pompe (2) peut être reliée de façon séparable à l'entraînement (6) du moteur par l'intermédiaire de l'embrayage primaire (PK), dans lequel l'embrayage primaire (PK) est disposé dans la boîte de vitesses (G), **caractérisé en ce que** l'embrayage primaire (PK) peut être actionné par la pression du convertisseur et est parcouru par l'huile du convertisseur.

4. Convertisseur hydrodynamique selon la revendication 3, **caractérisé en ce que** l'embrayage primaire (PK) peut être fermé par la pression du convertisseur par abaissement de la pression derrière le piston (11) de l'embrayage primaire (PK).

5. Convertisseur hydrodynamique selon la revendication 3, **caractérisé en ce que** l'embrayage primaire (PK) peut être fermé au moyen de la force d'un ressort (12), dans lequel le piston (11) peut être déplacé contre le ressort (12) par la pression du convertisseur, par abaissement de la pression derrière le piston (11), de telle manière que l'embrayage primaire (PK) s'ouvre.

6. Convertisseur hydrodynamique selon la revendication 3, **caractérisé en ce que**, pour la régulation exacte du couple de l'embrayage primaire (PK), la pression du convertisseur peut être mesurée, pour la détermination de la pression d'actionnement de l'embrayage, par un retour de pression vers la soupape de commande ou au moyen d'un capteur de pression.

7. Convertisseur hydrodynamique selon l'une quelconque des revendications précédentes, **caractérisé en ce que** l'embrayage primaire comprend un capteur de pression (14) pour détecter la pression du piston et/ou un capteur de vitesse de rotation (15) pour détecter la vitesse de rotation de la pompe.
